Europäisches Patentamt

European Patent Office

Office européen des brevets

(11) Veröffentlichungsnummer : **0 063 294 B1**

# EUROPÄISCHE PATENTSCHRIFT

(45) Veröffentlichungstag der Patentschrift : 26.06.85

(51) Int. Cl.⁴ : **B 60 N 3/02, F 16 B 21/07**

(21) Anmeldenummer : **82102860.2**

(22) Anmeldetag : **03.04.82**

(54) **Befestigungsvorrichtung, insbesondere für Armlehnen oder Haltegriffe an der Karosseriewand von Fahrzeugen.**

(30) Priorität : 11.04.81 DE 3114763

(43) Veröffentlichungstag der Anmeldung : 27.10.82 Patentblatt 82/43

(45) Bekanntmachung des Hinweises auf die Patenterteilung : 26.06.85 Patentblatt 85/26

(84) Benannte Vertragsstaaten :
DE FR GB IT SE

(56) Entgegenhaltungen :
DE-A- 2 355 343
DE-A- 2 408 238
DE-B- 1 238 795
DE-B- 2 906 288
DE-U- 8 015 201
FR-A- 2 428 540

(73) Patentinhaber : Gebr. Happich GmbH
Postfach 10 02 49 Clausenbrücke 1
D-5600 Wuppertal 1 (DE)

(72) Erfinder : Janz, Joachim
Jägerhofstrasse 116 b
D-5600 Wuppertal 1 (DE)
Erfinder : Svejkovsky, Ulrich
Heinrich-Hauser-Strasse 56
D-5600 Wuppertal 12 (DE)

## Beschreibung

Die Erfindung bezieht sich auf eine Befestigungsvorrichtung, insbesondere für Armlehnen oder Haltegriffe an der Karosseriewand von Fahrzeugen, der im Oberbegriff des Patentanspruchs 1 näher angegebenen Art. Die Anordnung von z. B. als Armlehnen ausgebildeten Bauteilen an einer Karosseriewand eines Fahrzeuges erfolgt im allgemeinen mittels Schrauben. Hierfür müssen in der Karosseriewand entsprechende Stanzlöcher und in den Armlehnen od. dgl. entsprechende Lochdurchzüge vorgesehen werden. Der Hauptnachteil der herkömmlichen Anordnung von Anbauteilen mittels Schrauben an einer Karosseriewand besteht in der arbeitsintensiven und damit kostenaufwendigen Montage. Daneben werden auch die sichtbaren Befestigungsstellen als störend, zumindest aber als unschön empfunden. Neben der Anordnung eines Anbauteils an einer Anschlußfläche ausschließlich durch Schrauben ist auch eine Anordnung bekannt, bei der die Befestigung eines Haltegriffes, einer Armlehne od. dgl. Bauteils an einer Verbindungsstelle durch Einrenken eines mit Bartausbildungen versehenen Stiftes in einen Durchbruch einer Karosseriewand erfolgt (vgl. DE-OS 24 08 238). Diese bekannte Anordnung erlaubt nur eine einseitige Festlegung bzw. eine Vormontage eines Bauteils, während die endgültige Anordnung bzw. Festlegung auch hier mittels Schrauben durchgeführt wird.

Es ist weiterhin eine Befestigungsvorrichtung (vgl. DE-U1-8 015 201) bekannt, bei der die Befestigung einer Armlehne oder dgl. an zwei Stellen durch jeweils einen lösbar in eine, eine Auszugssicherung aufweisende Aufnahme einrastbaren Stift erfolgt. Dabei ist ein Stift als in eine Aufnahme einsteckbarer Steckzapfen und zumindest ein weiterer Stift als etwa senkrecht zum Steckzapfen ausgerichteter Rastzapfen ausgebildet.

Eine Befestigungsvorrichtung der im Oberbegriff des Anspruchs 1 angegebenen Art ist in der DE-A-2 355 343 gezeigt und beschrieben. Ebenso wie beim Gegenstand der vorliegenden Erfindung erfolgt bei dieser bekannten Befestigungsvorrichtung die Befestigung an zumindest zwei Stellen durch jeweils zumindest einen lösbar in eine eine Auszugssicherung aufweisende Aufnahme einrastbaren Stift, der oder die an zumindest einer Befestigungsstelle vorgesehenen Stifte weisen eine äußere, quer zur Längsachse ausgerichtete mit einem als Auszugssicherung dienenden Sperrelement zusammenwirkende Rastnase auf, und das Sperrelement ist senkrecht von den Stiften weg bewegbar gelagert. Bei dieser bekannten Befestigungsvorrichtung ist es jedoch erforderlich das Sperrelement, welches eine sprengringartige Ausbildung aufweist von der Unterseite der Armlehne her unter Zuhilfenahme eines Werkzeuges auf den jeweiligen Stift aufzuschieben, was nicht nur recht umständlich ist, (die Befestigungsstellen sind nicht einsehbar) sondern auch erfordert, daß die Armlehne eine von unten her zugängliche Aussparung aufweist.

Es ist Aufgabe der Erfindung, die Vorrichtung der eingangs genannten Art zu vereinfachen, insbesondere die Befestigungsvorrichtung so auszubilden, daß die aufwendige Schraubarbeit entfallen kann. Insbesondere soll die Befestigungsvorrichtung eine schnelle, einfache und werkzeuglose Montage, wie auch eine einfache Demontage einer Armlehne, eines Haltegriffes od. dgl. ermöglichen.

Dieses Ziel erreicht die Erfindung durch die im Kennzeichenteil des Anspruchs 1 angegebenen Gestaltungsmerkmale.

Der besondere Vorteil der Erfindung wird in der erzielten Montagevereinfachung gesehen, die daraus resultiert, daß nun an keiner Befestigungsstelle mehr eine zeit- und arbeitsaufwendige Schraubarbeit durchgeführt werden muß. Weiterhin ist durch die Erfindung der Vorteil gegeben, daß an dem Anbauteil keine sichtbaren Befestigungsöffnungen mehr vorhanden sind. Schließlich liegt auch ein weiterer Vorteil der Erfindung in der wesentlich vereinfachten Demontierbarkeit der Armlehne od. dgl. begründet.

Die Erfindung sowie deren in den Unteransprüchen gekennzeichneten vorteilhaften Weiterbildungen werden nachfolgend anhand von in den anliegenden Zeichnungen dargestellten Ausführungsbeispielen näher erläutert.

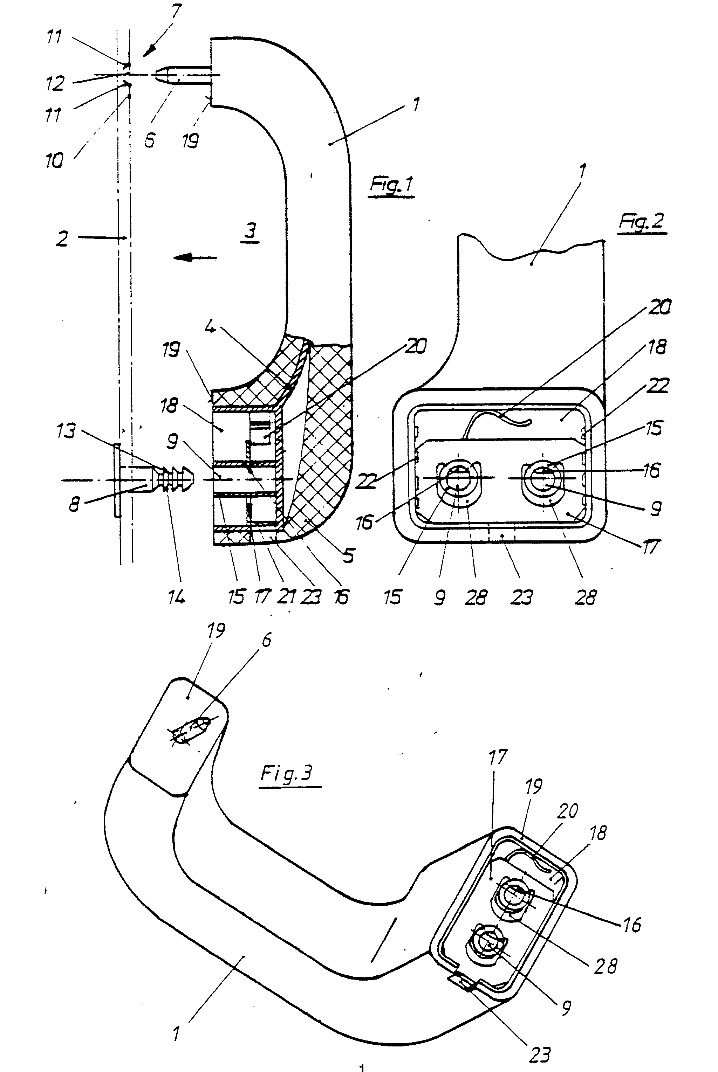

Sämtliche Figuren zeigen jeweils ein als Armlehne 1 ausgebildetes Anbauteil. In Fig. 1 ist die Armlehne 1 vor einer lediglich strichpunktiert angedeuteten Anschlußfläche, nämlich einer Karosseriewand 2 eines Fahrzeuges angeordnet, um eine der möglichen Montagestellungen zu demonstrieren. Die Armlehne 1 weist einen Durchgriff 3 auf und ist durch eine eingelagerte Versteifungseinlage 4, die aus einem Kunststoffspritzgußteil oder auch aus einem Blechformteil bestehen kann, ausgesteift, während sie im übrigen im wesentlichen aus Schaumkunststoff 5 besteht.

Die Befestigungsvorrichtung für die Armlehne 1 nach Fig. 1 und der hierzu die Rückansicht zeigenden Fig. 2 besteht aus einem in der Zeichnung oben dargestellten ersten Stift 6 mit einer zugehörigen Aufnahme 7 und aus zwei in der Zeichnung unten dargestellten Stiften 8 (von denen in der Zeichnung nur einer sichtbar ist) mit zugehörigen Aufnahmen 9.

Bei der Aufnahme 7 handelt es sich um eine insbesondere aus Federstahl bestehende Klammer 10, die als Auszugssicherung für den Stift 6 mit zwei in dessen Einsteckrichtung konvergierenden Federschenkeln 11 ausgebildet ist. Die Federschenkel 11 behindern einerseits das Einstecken des Stiftes 6 nicht, verhindern andererseits aber zuverlässig, daß der Stift 6 wieder aus der Aufnahme 7 herausgezogen werden kann, zumal die Winkelstellung der Federschenkel 11 so gewählt ist, daß Selbsthemmung besteht. Eine etwa erforderliche Demontage zwischen Stift 6 und Aufnahme 7 läßt sich auf verschiedene Weise ermöglichen. So ist es möglich, die Länge der Schlitzöffnung 12 größer zu wählen als die Länge der hierzu parallel ausgerichteten Federschenkel 11, so daß durch ein rückartiges Verschieben des Stiftes 6 (in der Einbaulage z. B. nach oben) dieser aus dem Klemmbereich der Federschenkel 11 herausgebracht und aus der Aufnahme 7 herausgezogen werden kann. Auch ist es möglich, den Stift 6 auf diametral gegenüberliegenden Seiten so weit abgeflacht auszubilden, daß die Federschenkel 11, wenn sie auf den Abflachungen zu liegen kommen, keine Klemmkraft auf den Stift 6 ausüben können. Ein Lösen des Stiftes 6 ist dann also möglich, wenn der Stift 6 durch Verschwenken der Armlehne 1 um seine Achse gedreht wird, bis die Abflachungen den Federschenkeln 11 benachbart sind. Ein Verschwenken der Armlehne 1 ist selbstverständlich nur dann möglich, wenn vorher die Verbindung zwischen den Teilen 8 und 9 gelöst worden ist.

Der Stift 6 kann in geeigneter Weise mit der Versteifungseinlage 4 fest verbunden oder auch einstückig mit ihr ausgebildet sein. Weiterhin kann der Stift 6 eine im wesentlichen glatte Oberfläche aufweisen, wobei er, wie Versuche gezeigt haben, zuverlässig durch die Federschenkel 11 gegen ein Ausziehen gesichert ist. Eine glatte Oberfläche des Stiftes 6 ermöglicht eine stufenlose Einschiebeweite und hilft damit, etwaige Toleranzen zu überbrücken. In besonderen Einbaufällen kann es aber von Vorteil sein, wenn der Stift 6 durch Riefen oder sägezahnartige Profilierung gebildete Raststufen aufweist.

Die Aufnahme 7 ist in geeigneter Weise, jedoch in der Zeichnung nicht im einzelnen dargestellt, unter Selbstsicherung an der Karosseriewand 2 gehalten.

Während der Stift 6 beim Ausführungsbeispiel nach Fig. 1 mit der Armlehne 1 verbunden ist, sind die Stifte 8 an der Karosseriewand 2 festgelegt, wobei die Art und Weise, wie die Festlegung erfolgen kann, im einzelnen nicht dargestellt ist. Jeder der Stifte 8 ist z. B. zylindrisch ausgebildet und zumindest über einen Teilbereich seiner Länge mit einer sägezahnartigen Profilierung versehen. Jeder Zahn 13 besitzt, in Steckrichtung der Stifte 8 gesehen, eine Anlaufschräge 14, während jeder Zahnrücken etwa senkrecht zur Stiftachse ausgerichtet ist.

Die Aufnahme 9 für die Stifte 8 besteht beim Ausführungsbeispiel nach Fig. 1 und 2 jeweils aus einer rohrstutzenartigen Führung 15, deren Innendurchmesser jeweils dem Außendurchmesser der Stifte 8 entspricht. Jede der Führungen 15 besitzt einen radialen Einschnitt, welcher jeweils von einer Sperrklinke 16 durchgriffen wird, wobei die Sperrklinken 16 einstückig mit einem Schieber 17 ausgebildet sind. Der Schieber 17 ist innerhalb einer auflageseitigen Öffnung 18 der Versteifungseinlage 4 angeordnet, und zwar in einer etwa parallel zu den Auflageflächen 19 der Armlehne 1 verlaufenden Ausrichtung. Der Schieber 17 ist innerhalb der Öffnung 18 gegen die Kraft einer Rückstellfeder 20 verschiebbar, wobei sich die Rückstellfeder 20, die einstückig mit dem Schieber 17 ausgebildet sein kann, gegen die Wandung der Öffnung 18 abstützt, die den Einschnitten in den Führungen 15 unmittelbar benachbart ist. Der Schieber 17 ist zum einen durch eine Abwinklung 21, die sich gegen die Rückwand der Öffnung 18 abstützt und zum andern vorderseitig durch Klipsnasen 22 geführt, welche Bestandteil der Versteifungseinlage 4 sind. Das Verschieben des Schiebers 17 wird durch darin vorgesehene Löcher 28 ermöglicht, deren Öffnungsquerschnitt entsprechend größer als der Außendurchmesser der sie durchdringenden Führungen 15 ist.

Die beschriebene Armlehne nach Fig. 1 und 2 kann durch eine geradlinige Bewegung gemäß des Richtungspfeiles in Fig. 1 montiert werden. Beim Steckvorgang werden die Federschenkel 11 der Aufnahme 7 durch den in die Schlitzöffnung 12 eindringenden Stift 6 leicht gespreizt. Durch die gleichzeitig in die Aufnahme 9 eindringenden Stifte 8 wird der Schieber 17 ratschenartig bewegt, weil die Anlaufschrägen 14 der Zähne 13 gegen die Sperrklinken 16 wirken und damit den Schieber 17 gegen die Kraft der Rückstellfeder 20 (in der Zeichnung) nach oben bewegen. Durch die Kraft der Rückstellfeder 20 werden die Sperrklinken 16 in Richtung senkrecht zur Achse der Stifte 8 belastet, so daß diese gegen Auszug gesichert sind, wenn die Sperrklinken 16 in die Lücken zwischen jeweils zwei Zähnen 13 einrasten.

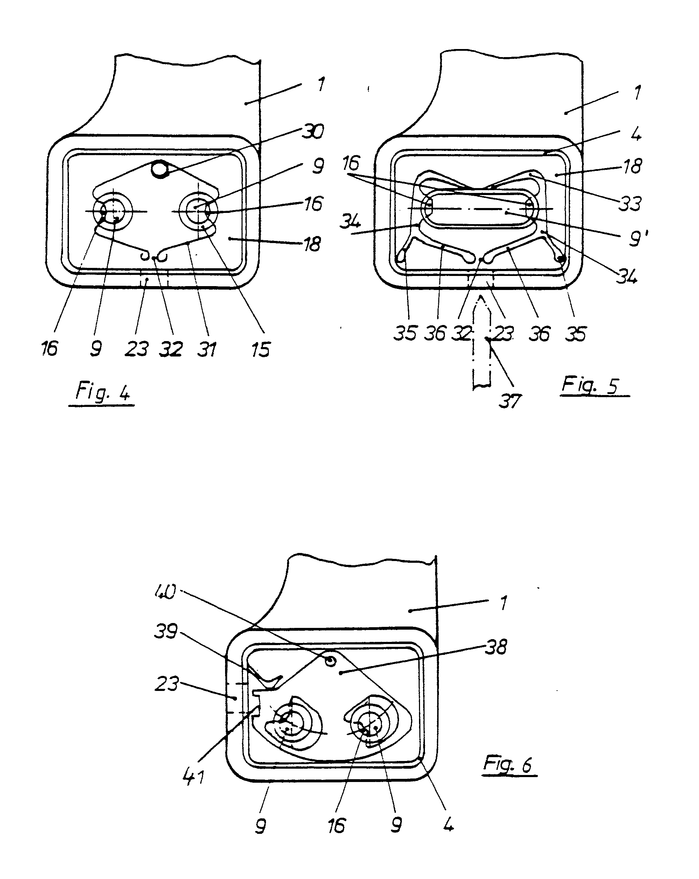

Ebenso wie die Verbindung zwischen dem Stift 6 und der Aufnahme 7 lösbar ausgebildet ist, ist dies auch für die Verbindung zwischen den Stiften 8 und den Aufnahmen 9 vorgesehen. Zum Lösen der Verbindung ist hier lediglich eine Verschiebung des Schiebers 17 entgegen der Kraft der Rückstellfeder 20 erforderlich, weil hierdurch zwangsläufig ein Ausrasten der Sperrklinken 16 aus den Lücken zwischen den Zähnen 13 der Stifte 8 erfolgt. Ein Verschieben des Schiebers 17 kann in besonders einfacher Weise mittels eines einfachen, an der Abwinklung 21 anzusetzenden Werkzeuges (Dorn, Schraubendreher od. dgl.) erfolgen, für dessen Einführen in die Öffnung 18 ein Durchbruch 23 in der der Abwinklung 21 benachbarten Wandung der Öffnung 18 vorgesehen ist. Fig. 3 zeigt die anhand der Fig. 1 und 2 näher beschriebene Armlehne 1 in schaubildlicher Darstellung.

In Fig. 4 ist eine Auszugssicherung für die in die Aufnahmen 9 einführbaren Stifte 8 aus einer Drahtfeder 30 gebildet. Die Drahtfeder 30 dringt mit abgebogenen, Sperrklinken 16 bildenden Bereichen durch radiale Einschnitte in den Führungen 15 in die Aufnahmen 9 ein. Die freien Schenkelenden 31 der Drahtfeder 30 laufen unter Belassung einer Schlitzöffnung 32 für ein durch den Durchbruch 23 einzuführendes Spreizwerkzeug zusammen. Zum Lösen der Befestigungsvorrichtung nach Fig. 4 ist lediglich ein Aufweiten der Schlitzöffnung 32 entgegen der Kraft der Drahtfeder 30 erforderlich, da hierdurch die Sperrklinken 16 aus den Aufnahmen 9 herausbewegt und die Stifte 8 freigegeben werden.

Eine dem Ausführungsbeispiel nach Fig. 4 im Prinzip entsprechende Lösung zeigt Fig. 5. Hier ist eine Feder 33 einstückig und vorzugsweise materialeinheitlich mit der Versteifungseinlage 4 ausgebildet. Eine Aufnahme 9′ besitzt eine langlochartige Querschnittsöffnung, deren Länge so bemessen ist, daß zwei Stifte 8 darin eingeführt werden können. An den Enden des langen Durchmessers sind die Wandungen der Aufnahme 9′ radial geschlitzt und durch die Schlitze dringen in die Aufnahme 9′ als Sperrklinken 16 für die Stifte 8 wirkende Bereiche der Feder 33 ein. Die Feder 33 besitzt einen außenseitig in die Wandung der Aufnahme 9′ übergehenden Steg und durch die seitlich daran angeformten Federschenkel 34, welche bereichsweise in die Aufnahme 9′ eindringen, eine etwa U-förmige Gestaltung. An den Enden der Federschenkel 34 sind außenseitig federnde Zapfen 35 angeformt, die sich an der Innenwandung der Öffnung 18 abstützen. An den Enden der Federschenkel 34 sind innenseitig Arme 36 angeformt, deren freie Enden eine Schlitzöffnung 32 bilden. Die Arme 36 dienen ausschließlich dazu, die Sperrklinken 16 für eine Demontage außer Eingriff mit der Verzahnung der Stifte 8 zu bringen, indem durch Einführen eines Werkzeuges 37 in die Schlitzöffnung 32 (wobei das Werkzeug 37 durch den Durchbruch 23 geführt wird) die Federschenkel 34 auseinanderbewegt werden.

Bei dem Ausführungsbeispiel der Erfindung nach Fig. 6 wird die Auszugssicherung für die in den Aufnahmen 9 sitzenden Stifte 8 von einer an einem Zapfen 40 pendelnd gelagerten Platte 38 übernommen, die mit radial in die Aufnahme 9 durch entsprechende Schlitze eindringenden Sperrklinken 16 ausgebildet ist. Die Sperrklinken 16 sind entlang eines die Aufnahmen 9 mittig schneidenden Kreisbogens angeordnet. Die Platte 38 besitzt etwa die Form eines Kreissektors und ist durch eine als Federarm 39 ausgebildete Rückstellfeder belastet, und zwar in einer Richtung, die die Sperrklinken 16 in die Aufnahmen 9 drängt. Beim Einstecken der Stifte 8 in die Aufnahmen 9 schwenkt die Platte 38 wegen der Anlaufschrägen 14 der Zähne 13, die gegen die Sperrklinken 16 wirken, aus und ermöglicht eine ungehinderte Montage. Für eine Demontage ist in der Armlehne 1 ein in der Öffnung 18 mündender Durchbruch 23 und in der Platte 38 eine Ausnehmung 41 vorgesehen. Mittels eines durch den Durchbruch 23 geführten und in die Ausnehmung 41 eingreifenden Werkzeuges 37 kann die Platte 38 um den Zapfen 40 geschwenkt werden, wobei die Sperrklinken 16 außer Eingriff mit der Verzahnung der Stifte 8 gelangen.

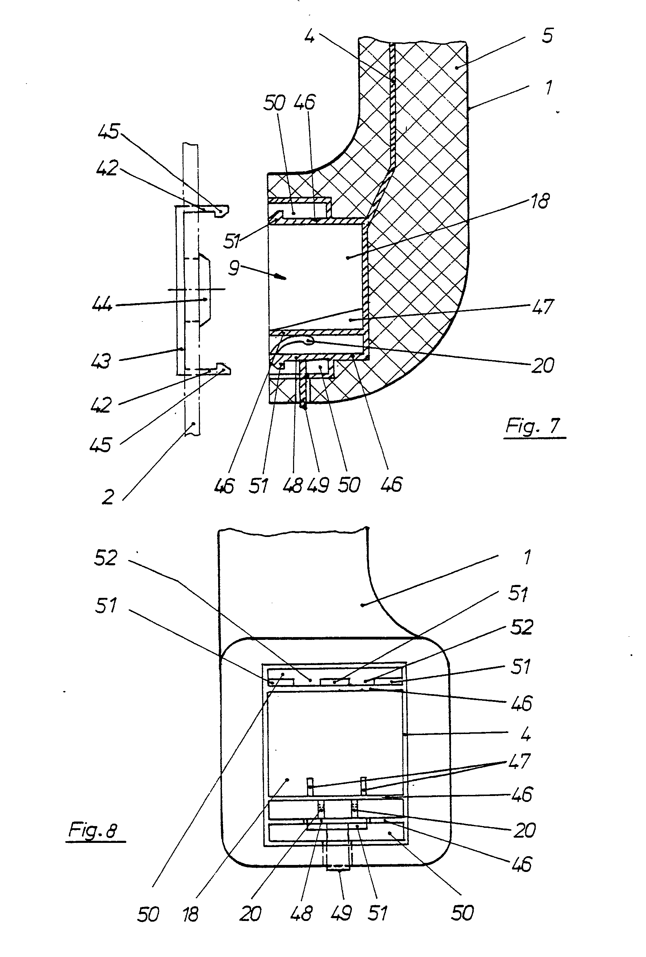

Die Fig. 7 und 8 zeigen eine Befestigungsvorrichtung an einer Armlehne 1, die, wie oben vorbeschrieben, auf dem Prinzip von in Aufnahmen einsteckbaren Stiften beruht, wobei auch eine lösbare Verrastung angestrebt wird. Bei diesem Ausführungsbeispiel sind zwei Stifte 42 vorzugsweise einstückig mit einer Leiste 43 ausgebildet. Ein an der Leiste 43 angeordneter Klips 44 ermöglicht eine einfache Steckmontage an einer Karosseriewand 2. Die Stifte 42 sind mit Abstand gegenüberliegend angeordnet und weisen an den einander zugewandten Seiten endseitig angeformte Rastnasen 45 auf. An der Leiste 43 können auch mehrere Stifte 42 angeordnet sein.

Die insgesamt wieder mit 9 bezeichnete Aufnahme für die Stifte 42 besteht aus einer durch die Versteifungseinlage 4 gebildeten Öffnung 18, welche durch Zwischenwände 46 in mehrere Einzelöffnungen unterteilt ist. Eine innere Zwischenwand 46 ist durch Rippen 47 versteift und dient als Stütze für Rückstellfedern 20, welche an der dieser Zwischenwand 46 am nächsten benachbarten Zwischenwand 46 angeordnet sind, wobei diese Zwischenwand 46 einen mit den Rückstellfedern 20 ausgerüsteten freigeschnittenen Bereich 48 aufweist, der über ein Stellglied 49 federelastisch in Richtung auf die mit Rippen 47 versteifte Zwischenwand bewegt werden kann. Sowohl in Fig. 7 als auch in Fig. 8 ist jeweils eine kleine Öffnung 50, die zur Aufnahme der Stifte 42 dient, durch Rastnasen 51, welche im montierten Zustand der Armlehne 1 die Rastnasen 45 der Stifte 42 hintergreifen, eingeengt. Zwischen den in der Zeichnung oberen Rastnasen 51 sind Freiräume 52 vorgesehen, durch welche die Rastnasen 45 (in diesem Falle sind zwei Rastnasen 45 vorgesehen) zum Zwecke der Montage und Demontage durchgeschoben werden können. Im montierten Zustand hintergreifen die Rastnasen 45, wie erwähnt, die Rastnasen 51.

Die Erfindung läßt sich mit Vorteil auch dann verwirklichen, wenn eine der Befestigungsvorrichtungen aus einer ein relativ hohes Anzugsmoment ermöglichenden Einrenkverbindung bestehen soll. Bei der Montage einer Armlehne 1 od. dgl. Bauteile wird dann zunächst die Einrenkverbindung hergestellt und dann die andere Verbindung mittels einer der oben beschriebenen Steckmontagen vorgenommen.

**Patentansprüche**

1. Befestigungsvorrichtung, insbesondere für Armlehnen (1) oder Haltegriffe an der Karosseriewand (2) von Fahrzeugen, wobei die Befestigung an zumindest zwei Stellen durch jeweils zumindest einen lösbar in eine eine Auszugssicherung aufweisende Aufnahme (7, 9, 9′) einrastbaren Stift erfolgt, die Stifte (6, 8, 42) parallel zueinander ausgerichtet sind, der oder die an zumindest einer Befestigungsstelle vorgesehenen Stifte (8, 42) eine äußere, quer zur Längsachse ausgerichtete mit einem als Auszugssicherung dienenden Sperrelement (17, 30, 33, 38, 51) zusammenwirkende Rastnase (45) aufweisen, und das Sperrelement (17, 30, 33, 38, 51) senkrecht vom Stift bzw. von den Stiften (8, 42) weg bewegbar gelagert ist, dadurch gekennzeichnet, daß das Sperrelement (17, 30, 33, 38, 51) gegen die Kraft einer Rückstellfeder (20, 30, 33, 39) von den Stiften (8, 42) weg bewegbar ist und daß Anlaufschrägen (14) beim Einstecken der Stifte (8, 42) das Sperrelement (17, 30, 33, 38, 51) gegen die Kraft der Rückstellfeder (20, 30, 33, 39) ratschenartig bewegen und dadurch die Stifte (8, 42) einrasten.

2. Befestigungsvorrichtung nach Anspruch 1, dadurch gekennzeichnet, daß die Befestigung an beiden Stellen in an sich bekannter Weise durch geradliniges Einstecken der Stifte (6, 8, 42) in die Aufnahmen (7, 9, 9') vorgenommen wird.

3. Befestigungsvorrichtung nach Anspruch 1, dadurch gekennzeichnet, daß die Befestigung an einer Stelle durch Einrenken eines Stiftes in eine Aufnahme und an der anderen Stelle durch Einstecken des Stiftes (8, 42) in die Aufnahme (9, 9') vorgenommen wird.

4. Befestigungsvorrichtung nach Anspruch 1, dadurch gekennzeichnet, daß das Sperrelement aus einem durch eine Rückstellfeder (20) belasteten Schieber (17) besteht, der mit zumindest einer Sperrklinke (16) ausgebildet ist.

5. Befestigungsvorrichtung nach Anspruch 1, dadurch gekennzeichnet, daß das Sperrelement aus einer pendelnd gelagerten, durch eine Rückstellfeder (Federarm 39) belasteten Platte (38) besteht, die mit zumindest einer Sperrklinke (16) ausgebildet ist.

6. Befestigungsvorrichtung nach Anspruch 1, dadurch gekennzeichnet, daß das Sperrelement einstückig aus einer Feder (30, 33) gebildet ist.

7. Befestigungsvorrichtung nach Anspruch 6, dadurch gekennzeichnet, daß die Feder als gebogene Drahtfeder (30) ausgebildet ist.

8. Befestigungsvorrichtung nach Anspruch 6, dadurch gekennzeichnet, daß die Feder (33) als Kunststoffspritzgußteil ausgebildet ist.

9. Befestigungsvorrichtung nach Anspruch 1, dadurch gekennzeichnet, daß der mit einer Rastnase (45) ausgebildete Stift (42) eine in der Aufnahme (9) vorgesehene Rastnase (51) hintergreift.

10. Befestigungsvorrichtung nach einem oder mehreren der vorangegangenen Ansprüche, dadurch gekennzeichnet, daß die Aufnahme (9, 9') aus zumindest einer rohrstutzenartigen, einen Stift (8) aufnehmenden Führung (15) besteht, welche zumindest einen radialen Schlitz aufweist, durch welchen die in die Verzahnung des Stiftes (8) eingreifende Sperrklinke (16) des Sperrelements (Schieber 17, Platte 38, Drahtfeder 30, Kunststoffeder 33) hindurchgreift, wobei die Führung (15) in einer Öffnung (18) an der Auflagefläche (19) des Anbauteils angeordnet ist, in welcher auch das Sperrelement (Schieber 17, Platte 38, Drahtfeder 30, Kunststoffeder 33) in einer senkrecht zur Achse der Führung (15) ausgerichteten Anordnung geführt ist.

11. Befestigungsvorrichtung nach einem oder mehreren der vorangegangenen Ansprüche, dadurch gekennzeichnet, daß die Armlehne (1) einen in der Öffnung (18) mündenden Durchbruch (23) aufweist, der das Durchführen eines als Schraubendreher od. dgl. ausgebildeten Werkzeugs (37) ermöglicht, um durch Verschieben, Verschwenken oder Spreizen des Sperrelements (Schieber 17, Platte 38, Federn 30, 33, Rastnase 51) dieses aus seiner Einrastlage lösen zu können.

12. Befestigungsvorrichtung nach einem oder mehreren der vorangegangenen Ansprüche, dadurch gekennzeichnet, daß das Sperrelement (Schieber 17, Platte 38) zumindest ein von der als rohrstutzenartige Führung (15) ausgebildeten Aufnahme (9) durchsetztes Loch (28) aufweist, welches größer als der Durchmesser der Führung (15) ist und welches zumindest durch eine einen radialen Schlitz in der Führung (15) durchdringende Sperrklinke (16) eingeengt ist.

**Claims**

1. A fastening system, particularly for fastening an armrest (1) or a hand-grip to the wall (2) of a vehicle body, in which fastening is effected at at least two places and at each place by at least one pin releasably lockable in a locating hole (7, 9, 9') provided with a withdrawal-inhibiting device, in which the pins (6, 8, 42) extend parallel with one another, in which the pin or pins (8, 42) employed at at least one of the fastening places is or are provided with an external detent (45) extending tranversely to the respective pin's longitudinal axis and arranged to interact with a latching element (17, 30, 33, 38, 51) serving as the withdrawal-inhibiting device, and in which the latching element (17, 30, 33, 38, 51) is mounted so as to permit it being moved in a direction normal to and away from the respective pin or pins (8, 42), characterized in that the latching element (17, 30, 33, 38, 51) is movable away from the respective pin or pins (8, 42) against the bias of a restoring spring (20, 30, 33, 39), and in that the pins (8, 42) are formed with entry slants (14) which, on insertion of the pins, move the latching element (17, 30, 33, 38, 51), ratchet-like, against the bias of the respective restoring spring (20, 30, 33, 39) causing the pins (8, 42) to be locked.

2. A fastening system according to claim 1, characterized in that the fastening at the two places is effected by — as known *per se* — rectilinearly plugging the pins (6, 8, 42) into the respective locating holes (7, 9, 9').

3. A fastening system according to claim 1, characterized in that the fastening at the one place is effected by wriggling one of the pins into the respective locating hole and at the other place by plugging the pin or pins (8, 42) into its or their respective locating hole (9, 9').

4. A fastening system according to claim 1, characterized in that the latching element is a slide plate (17) which is biased by the restoring spring (20) and provided with at least one pawl (16).

5. A fastening system according to claim 1, characterized in that the latching element is a pivotably mounted plate (38) which is biased by the restoring spring (spring arm 39) and provided with at least one pawl (16).

6. A fastening system according to claim 1, characterized in that the restoring spring (30 and, respectively, 33) is integral with and forms the latching element.

7. A fastening system according to claim 6, characterized in that the restoring spring is a bent wire spring (30).

8. A fastening system according to claim 6, characterized in that the restoring spring is an injection-moulded plastics component.

9. A fastening system according to claim 1, characterized in that the pin (42) or pins provided with the detent (45) is or are arranged to engage the rear of a further detent or detents (51) arranged in the locating hole (9).

10. A fastening system according to any one or more of the preceding claims, characterized in that the locating hole (9, 9') comprises at least one pipe socket-like guide (15) adapted to receive the pin (8) and having a radial slot for the passage therethrough of the latching element's (slide plate 17, pivotable plate 38, wire spring 30 or plastics spring 33) pawl (16) arranged to engage toothing provided on the pin (8), in that the guide (15) is disposed in an aperture (18) extending inwardly from the contact surface (19) of the component to be fastened, and in that the latching element (slide plate 17, pivotable plate 38, wire spring 30 or plastics spring 33) is also guided in the aperture (18) and arranged perpendicularly to the axis of the guide (15).

11. A fastening system according to any one or more of the preceding claims, characterized in that the armrest (1) is provided with a channel (23) terminating in the aperture (18) and permitting a tool (37) such as a screwdriver or the like to be inserted therethrough so as to slidably displace or pivot or straddle the latching element (slide plate 17, pivotable plate 38, springs 30 and 33, detent(s) 51) for the purpose of moving it out of its pin-locking position.

12. A fastening system according to any one or more of the preceding claims, characterized in that the latching element (slide plate 17, pivotable plate 38) is provided with at least one hole (28) which is penetrated by the locating hole (9) as formed by the pipe socket-like guide (15) which in size is larger than the diameter of the guide (15) but which is narrowed by at least one pawl (16) passing through the radial slot in the guide (15).

**Revendications**

1. Dispositif de fixation, en particulier pour accoudoirs (1), ou poignées de maintien, fixés à la paroi (2) de la carrosserie de véhicules, la fixation étant effectuée en au moins deux points et à chacun par au moins une cheville pouvant s'accrocher de façon amovible dans un logement (7, 9, 9') comportant un moyen de sûreté empêchant son retrait, les chevilles (6, 8, 42) étant orientées parallèlement entre elles, la ou les chevilles (8, 42) prévues en au moins un point de fixation comportant un ergot de crantage (45) extérieur, orienté perpendiculairement à l'axe longitudinal, coopérant avec un élément d'arrêt (17, 30, 33, 38, 51) constituant le moyen de sûreté empêchant le retrait, et l'élément d'arrêt (17, 30, 33, 38, 51) étant placé de façon à pouvoir être éloigné perpendiculairement de la ou des chevilles (8, 42), caractérisé en ce que l'élément d'arrêt (17, 30, 33, 38, 51) peut être éloigné des chevilles (8, 42) contre la force d'un ressort de rappel (20, 30, 33, 39), et en ce que, lorsqu'on enfonce les chevilles (8, 42), des chanfrains d'introduction (14) déplacent l'élément d'arrêt (17, 30, 33, 38, 51) contre la force du ressort de rappel (20, 30, 33, 39) à la façon d'un cliquet et accrochent ainsi les chevilles (8, 42).

2. Dispositif selon la revendication 1, caractérisé en ce que la fixation aux deux points est effectuée, de façon connue en soi, par enfoncement rectiligne des chevilles (6, 8, 42) dans les logements (7, 9, 9').

3. Dispositif selon la revendication 1, caractérisé en ce que la fixation en un point est effectuée par introduction d'une cheville dans un logement avec ancrage par rotation et, à l'autre point, par enfoncement de la cheville (8, 42) dans le logement (9, 9').

4. Dispositif selon la revendication 1, caractérisé en ce que l'élément d'arrêt est constitué par un coulisseau (17) soumis à l'action d'un ressort de rappel (20), comportant au moins un cliquet d'arrêt (16).

5. Dispositif selon la revendication 1, caractérisé en ce que l'élément d'arrêt est constitué par une plaque (38) montée oscillante, soumise à l'action d'un ressort de rappel (bras élastique 39), comportant au moins un cliquet d'arrêt (16).

6. Dispositif selon la revendication 1, caractérisé en ce que l'élément d'arrêt est constitué d'une seule pièce par un ressort (30, 33).

7. Dispositif selon la revendication 6, caractérisé en ce que le ressort est réalisé sous la forme d'un ressort en fil métallique (30) cintré.

8. Dispositif selon la revendication 6, caractérisé en ce que le ressort (33) est réalisé sous la forme d'une pièce de matière plastique moulée par injection.

9. Dispositif selon la revendication 1, caractérisé en ce que la cheville (42), comportant un ergot de crantage (45) s'accroche par l'arrière à un ergot de crantage (51) se trouvant dans le logement (9).

10. Dispositif selon une ou plusieurs des revendications précédentes, caractérisé en ce que le logement (9, 9') comprend au moins un guidage (15) en forme de section de tube, recevant une cheville (8), qui comporte au moins une fente radiale par laquelle passe le cliquet d'arrêt (16) de l'élément d'arrêt (coulisseau 17, plaque 38, ressort en fil métallique 30, ressort plastique (33) s'accrochant à la denture de la cheville (8), le guidage (15) étant placé dans une ouverture (18) formée contre la surface d'appui (19) de l'élément à monter, dans laquelle l'élément d'arrêt (coulisseau 17, plaque 38, ressort en fil métallique 30, ressort en matière plastique 33) est également guidé dans une disposition orientée perpendiculairement à l'axe du guidage (15).

11. Dispositif selon une ou plusieurs des revendications précédentes, caractérisé en ce que l'accoudoir (1) comporte un passage (23) débouchant dans l'ouverture (18), qui permet le passage d'un outil (37) réalisé sous la forme d'un tournevis ou sous une forme analogue, pour permettre de dégager l'élément d'arrêt de sa position de crantage en déplaçant en translation ou en rotation, ou en écartant ledit élément d'arrêt (coulisseau 17, plaque 38, ressorts 30, 33, ergot de crantage 51).

12. Dispositif selon une ou plusieurs des revendications précédentes, caractérisé en ce que l'élément d'arrêt (coulisseau 17, plaque 38) comporte au moins un trou (28) que traverse le logement (9) réalisé sous la forme d'un guidage en forme de section de tube (15), supérieur au diamètre du guidage (15) et rétréci au moins par un cliquet d'arrêt (16) passant par une fente radiale pratiquée dans le guidage (15).

_Fig.1_

_Fig.2_

_Fig.3_

Fig. 4

Fig. 5

Fig. 6

Fig. 7

Fig. 8